# EUROPÄISCHE PATENTSCHRIFT

(11) **EP 1 774 846 B1**
(45) Veröffentlichungstag und Bekanntmachung des Hinweises auf die Patenterteilung: **27.06.2012**
(21) Anmeldenummer: 07002021.9
(22) Anmeldetag: 05.11.2003
(51) Int. Cl.: A01D 78/10

(54) **Kreiselschwader**
Rotary swather
Andaineuse rotative

(30) Priorität: 13.12.2002 DE 10258661
(43) Veröffentlichungstag der Anmeldung: 18.04.2007
(62) Teilanmeldung aus: 03025218.3
(73) Patentinhaber: CLAAS Saulgau GmbH, 88348 Bad Saulgau (DE)
(72) Erfinder: Geng, Manfred, 88348 Bad Saulgau (DE)
(74) Vertreter: Otten, Roth, Dobler & Partner

(56) Entgegenhaltungen:
- EP-A- 1 493 321
- DE-A- 19 916 759
- DE-U- 20 221 411

## Beschreibung

Die Erfindung betrifft einen Kreiselschwader gemäß dem Oberbegriff des unabhängigen Anspruchs 1.

Der wachsende Wettbewerbsdruck auf dem Agrarsektor der Grünfutterernte verlangt ständig nach leitungsfähigeren Maschinen mit größeren Arbeitsbreiten.

In der EP 0 819 272 ist ein Kreiselschwader mit vier Schadkreiseln beschrieben, der in dem CLAAS - Prospekt "Schwader LINIER, Ausgabe 8/01 (DC) 200/248 522.0 abgebildet und beschrieben ist. Ein derartiger Schwader mit vier Schwadkreiseln ist unter der Handelsbezeichnung LINER 3000 abgebildet und beschrieben. Die erreichbare Arbeitsbreite von Vier-Kreiselschwadern dieser Bauart liegt derzeit bei etwa 15 Meter.

Aus der DE 199 16 759 ist zudem ein Kreiselschwader bekannt, wobei jeweils ein Kreiselpaar gemeinsam um eine vertikale Drehachse zur Drehrichtungsumkehr dieser Kreisel verstellt werden kann.

Die Aufgabe der Erfindung ist es, einen Schwader mit noch größerer Arbeitsbreite zu schaffen unter dem Gesichtspunkt großer Flexibilität hinsichtlich der Anpassungsmöglichkeiten an unterschiedliche Einsatzbedingungen, um dadurch die Wirtschaftlichkeit im Großflächeneinsatz zu gewährleisten, wobei der Schwader dabei so ausgebildet sein soll, dass er trotz seiner großen Arbeitsbreite sicher geführt werden kann und dass dieser sich in ein Straßentransportprofil überführen lässt, das den gesetzlichen und verkehrsrechtlichen Bestimmungen entspricht.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei insbesondere einen Kreiselschwader mit gestaffelt angeordneten Schwadkreiseln derart vor, dass diese in einer V-förmigen Anordnung nach vorne in Fahrtrichtung offen in wenigstens drei Staffelreihen hintereinander angeordnet sind, wobei wenigstens eine Staffelreihe hinter einem Fahrwerk und wenigstens zwei Staffelreihen vor einem Fahrwerk angeordnet sind, und dabei wenigstens die Staffelreihen vor dem Fahrwerk über längenveränderbare Ausleger verfügen.

Gemäß der Erfindung sind Antriebsmittel zum Antreiben der Schwadkreisel sowie Stellmittel zum Verstellen der Schwadkreisel von der Arbeits- in die Transportstellung unabhängig voneinander steuerbar. Vorteilhafterweise ist eine zentrale Steuerung hierfür vorgesehen, die insbesondere von der Fahrerkabine bzw. vom Fahrersitz aus bedienbar ist.

In einer weiteren Ausgestaltung der Erfindung verfügen die Ausleger sämtlicher Staffelreihen über längenveränderbare Ausleger. Dabei sind die längenveränderbaren Ausleger vorzugsweise als teleskopierbare Ausleger ausgestaltet, deren Stellantriebe zum Ein- bzw. Ausfahren vorzugsweise in an sich bekannter Weise von Hydraulikzylindern gebildet werden.

Dabei sind die Ausleger an ein Fahrgestell in Klappgelenken angelenkt und sie können dabei um die in Fahrtrichtung weisenden Gelenkachsen von der Arbeitsstellung in ihre Transportstellung in ebenfalls bekannter Weise von Hydraulikzylindern als Stellantriebe hochgeklappt werden. Am freien äußeren Ende der Ausleger sind die eigentlichen Schwadkreisel angelenkt, die sich in ihrer Arbeitsstellung gegenüber dem Boden auf eigenen Fahrwerken abstützen. Die Anlenkung der Schwadkreisel ist so ausgestaltet, dass diese sich in bekannter Weise während ihrer Vorwärtsbewegung dem Bodenprofil anpassen können.

Der erfindungsgemäße Kreiselschwader erzeugt Arbeitsbreiten, die sich weit über das Maß des Bekannten erstrecken. Beispielsweise lassen sich mit sechs Schwadkreiseln Arbeitsbreiten bis zu 22 Metern erreichen. Dieses verlangt nach Auslegern, die einen entsprechenden Abstand der Schwadkreisel gegenüber dem Maschinengestell überbrücken und die andererseits in der Lage sind, die Schwadkreisel in eine Transportposition zu verbringen, die etwa eine Breite von 3 Metern und etwa eine Höhe von 4 Metern nicht überschreitet.

Der Antrieb der Schwadkreisel erfolgt vorzugsweise über zapfwellengetriebene Antriebsstränge, die sich aus verschiedenen Gelenkwellen und Verzweigungsgetrieben zusammensetzen. Aber auch hydraulische Antriebe gebildet aus Hydraulikmotoren, die direkt an den Schwadkreiseln angeblockt sind, sind möglich.

Besonders vorteilhaft sind in den Kreuzungspunkten der Antriebsstränge schaltbare Winkelgetriebe angebracht, deren in Richtung der Schwadkreisel sich erstreckende Antriebsstränge vom Hauptantriebsstrang durch schaltbare Kupplungen zu oder abgeschaltet werden können und auch in ihrer Drehrichtung umgeschaltet werden können. Dieses ermöglicht einen besonders flexiblen Einsatz eines Großschwaders nach der Erfindung. Beispielsweise können dadurch allein durch die Variation der Drehrichtungszuordnungen der Schwadkreisel unterschiedliche Schadablagen erzeugt werden. Dadurch können wahlweise entweder ein Großschwad in der Hauptmittelebene oder drei Einzelschwade beabstandet zueinander symmetrisch zur Hauptmittelebene erzeugt werden. Durch individuelle Ansteuerung der Länge jedes einzelnen Auslegers der Staffelreihen können dabei die optimalen Abstände der Schwadkreisel zueinander eingestellt werden. Durch die hydraulischen Stellantriebe kann dieser Verstellvorgang aus der Fahrerkabine auch während der Fahrt vorgenommen werden.

Bei dicken Futterbeständen, beispielsweise im ersten Schnitt der Erntesaison kann es sinnvoller sein, beispielsweise zur Schonung der Antriebsstränge der Schwadkreisel oder wegen der nachfolgenden Arbeitsgänge mehrere Einzelschwade zu bilden, während es bei nachfolgenden Schnitten sinnvoller sein kann, einen Mittelschwad als Großschwad zu bilden.

Zur besseren Manövrierfähigkeit des Großschwaders ist es sinnvoll, diesen mit gelenkten Rädern auszustatten.

Ebenfalls kann ein Großschwader nach der Erfindung auch als selbstfahrender Schwader über einen Triebkopf verfügen, der sich auf einer lenkbaren Vorderachse abstützt und der ebenfalls über eine lenkbare Hinderachse verfügt.

Nähere Einzelheiten der Erfindung sind in den nachfolgenden Figurendarstellungen und deren Beschreibung zu entnehmen.

Es zeigen:
- Figur 1: ein Ausführungsbeispiel der Erfindung dargestellt am Beispiel eines gezogenen Kreiselschwaders in einer Draufsicht in Arbeitsstellung,
- Figur 2: ein anderes Ausführungsbeispiel der Erfindung dargestellt am Beispiel eines selbstfahrenden Kreiselschwaders in einer Draufsicht in Arbeitsstellung analog Figur 1,
- Figur 2a: ein anderes Ausführungsbeispiel der Erfindung dargestellt am Beispiel eines selbstfahrenden Kreiselschwaders mit gelenkig angekoppeltem Triebkopf in einer Draufsicht in Arbeitsstellung analog Figur 2,
- Figur 2b: den Kreiselschwader nach der Erfindung in einer Manövriersituation in Rückwärtsfahrt analog Figur 2a,
- Figur 3: ein Anwendungsbeispiel nach der Erfindung analog eines Kreiselschwaders gemäß der Figur 1, Figur 2, Figur 2a und Figur 2b hinsichtlich einer alternativen Schwadbildung und Schwadablage,
- Figur 4: eine vereinfachte und freigelegte Darstellung der Antriebsstränge zum Antrieb der Schwadkreisel gemäß der Figur 1, Figur 2, Figur 2a und Figur 2b,
- Figur 4a: einen vergrößerten Ausschnitt aus der Darstellung der Figur 4,
- Figur 4b: eine Verzweigung der Antriebsstränge zwischen Hauptantriebsstrang und den mittleren Antriebssträngen zu den Schwadkreiseln mit schaltbaren Kupplungen zum antriebsmäßigen An- oder Abkoppeln der Schwadkreisel,
- Figur 4c: eine erweiterte Ausführung des Schaltgetriebes analog Figur 4b,
- Figur 4d: das Schaltgetriebe analog Figur 4c in einem umgekehrten Beschaltungszustand mit Drehrichtungsumkehr der Schwadkreisel,
- Figur 5: eine weitere alternative Einsatzmöglichkeit der Erfindung eines Kreiselschwaders nach der Erfindung eingesetzt als Seitenschwader durch einseitiges Hochklappen der Schwadkreisel,
- Figur 6: eine weitere alternative Einsatzmöglichkeit der Erfindung eines Kreiselschwaders nach der Erfindung eingesetzt als Mittelschwader durch das Hochklappen der mittleren Schwadkreisel,
- Figur 7: eine weitere alternative Einsatzmöglichkeit der Erfindung eines Kreiselschwaders nach der Erfindung eingesetzt als Mittelschwader durch das Hochklappen der mittleren Schwadkreisel,
- Figur 8: eine weitere alternative Einsatzmöglichkeit der Erfindung eines Kreiselschwaders nach der Erfindung eingesetzt als Mittelschwader durch das Hochklappen der vorderen Schwadkreisel,
- Figur 9: eine Prinzipdarstellung eines Kreiselschwaders gemäß der Erfindung mit einem Hinderniserkennungssystem,
- Figur 10: einen Kreiselschwader nach der Erfindung in Transportstellung mit hochgeklappten Schwadkreiseln.

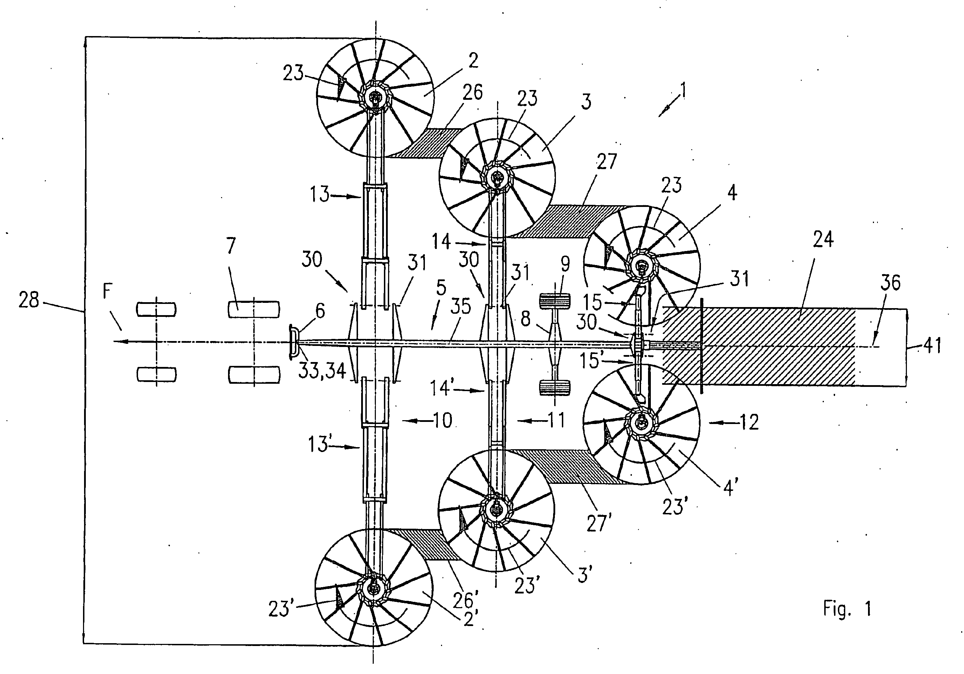

Figur 1 zeigt ein Ausführungsbeispiel der Erfindung am Beispiel eines gezogenen Großschwaders als Kreiselschwader 1 mit sechs am Boden über Laufräder abgestützten Schwadkreiseln 2, 2', 3, 3', 4, 4' in einer Draufsicht in Arbeitsstellung im ausgeklappten Zustand der Schwadkreisel 2, 2', 3, 3', 4, 4' und somit im gestreckten Zustand der Ausleger 13, 13' 14, 14' 15, 15'. Jeweils zwei gegenüberliegende Schwadkreisel 2, 2'; 3, 3', 4, 4' bilden als Paar gemeinsam mit den ihnen zugehörigen Auslegern 13, 13', 14, 14', 15, 15' eine in Fahrtrichtung gestaffelte Reihe von Schwadkreiseln, nachfolgend als Staffelreihen 10, 11, 12 bezeichnet.

Die Ausleger 13, 13', 14, 14', 15, 15' der Schwadkreisel 2, 2', 3, 3', 4, 4' sind an einem deichselbildenden Längsträger 35 als Teil des Fahrgestells 5 in Klappgelenken 30, hochklappbar um etwa 90° um deren Gelenkachsen 31 angelenkt. Die vorderen Ausleger 13, 13' sind dabei als zweifach, die mittleren Ausleger 14, 14' und die hinteren Ausleger 15, 15' als einfach teleskopierbare längenveränderbare Ausleger ausgebildet.

Das Fahrgestell 5 ist mittels einer Kupplungseinrichtung 6 mit dem Traktor 7 in den Unterlenkern als Zugeinrichtung verbunden. Der deichselbildende Längsträger 35 wiederum ist in dem Zuggelenk 33 um eine Hochachse 34 verschwenkbar und frei nachlaufend mit der Kupplungseinrichtung 6 verbunden.

Das Fahrgestell 5 wird von einem Fahrwerk 8 mit den Laufrädern 9 gegenüber dem Boden abgestützt. Die Laufräder 9 sind vorzugsweise mit einer Lenkeinrichtung in an sich bekannter Weise ausgestattet, die den Lenkeinschlag der Laufräder in Abhängigkeit vom Einschlagwinkel zwischen der Kupplungseinrichtung 6 und dem deichselbildenden Längsträger 35 steuert. Dieses verbessert das Nachlaufverhalten hinsichtlich der Spurtreue gegenüber dem Traktor und erhöht die Wendigkeit hinsichtlich der Manövrierfähigkeit.

Die Ausleger 13, 13', 14, 14' der Schwadkreisel 2, 2', 3, 3' sind in dem dargestellten Beispiel der Erfindung von dem Fahrwerk 8 des Fahrgestells 5 und die Schwadkreisel 4, 4' hinter dem Fahrwerk 8 angeordnet. Das Fahrwerk kann aber ebenso in dem Bereich der Längsrestreckung zwischen der ersten Staffelreihe und der dritten Staffelreihe angeordnet sein. Dabei ergibt sich eine gestaffelte Anordnung der Schwadkreisel 2, 2', 3, 3', 4, 4', die eine in Fahrtrichtung F offene V-förmige Anordnung darstellt. In dieser gestaffelten Anordnung bilden zwei sich gegenüberliegende Schwadkreisel 2, 2', 3, 3', 4, 4' jeweils eine Staffelreihe 10, 11, 12, wobei diese die V-förmig angeordneten Schwadkreisel 2, 2', 3, 3', 4, 4' etwa spiegelbildlich um die vertikale Längsmittelebene 36 des Kreiselschwaders 1 verteilt sind.

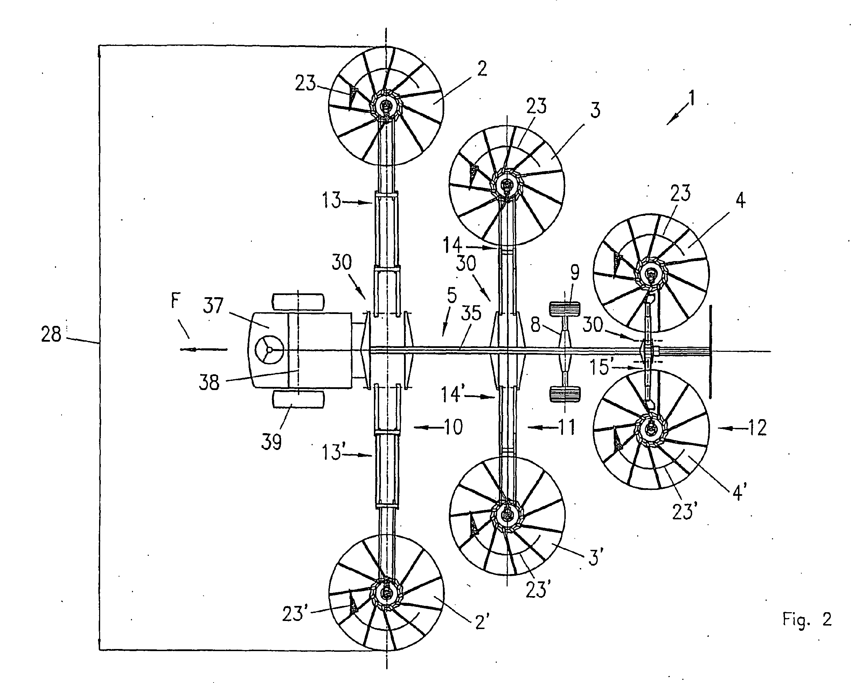

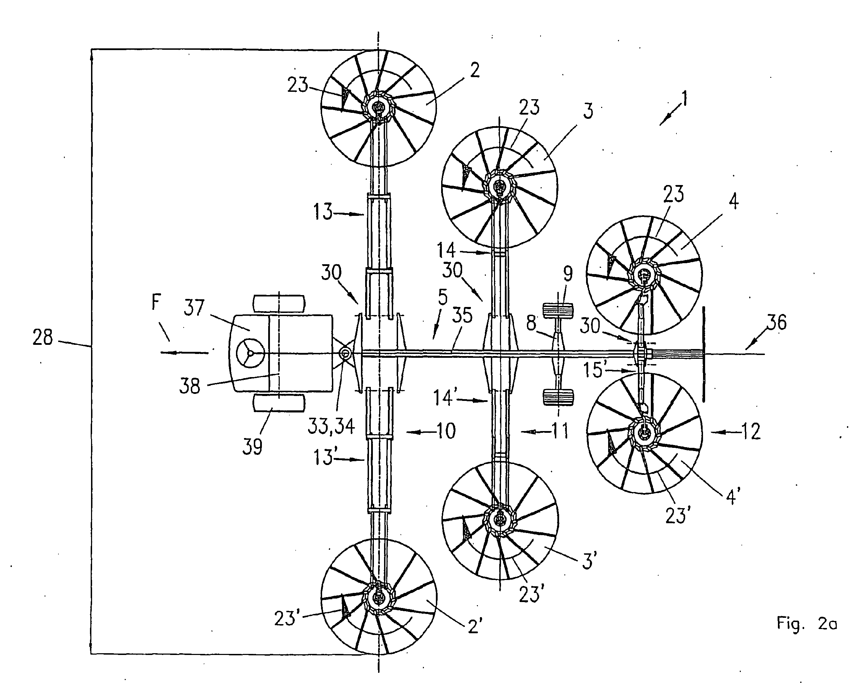

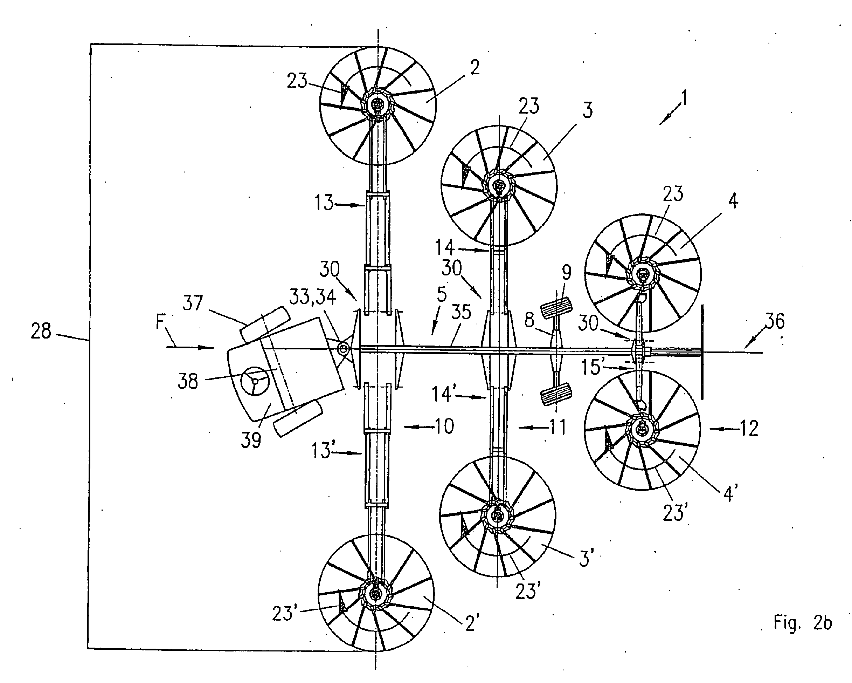

Figur 2 zeigt ein Ausführungsbeispiel der Erfindung dargestellt am Beispiel eines selbstfahrenden Kreiselschwaders 1 in einer Draufsicht in Arbeitsstellung analog Figur 1: Dabei ist der Kreiselschwader 1 mit einem Triebkopf 37, der auf einer angetriebenen Vorderachse 38 mit dessen lenkbaren Antriebsrädern 39 gegenüber dem Boden abgestützt ist, verbunden. Der Triebkopf 37 kann sowohl starr als auch gelenkig mit dem Fahrgestell 5 des Kreiselschwaders 1 verbunden sein. Figur 2 zeigt ein Ausführungsbeispiel für eine starre Kopplung.

Figur 2a zeigt ein Ausführungsbeispiel für eine gelenkige Kopplung zwischen dem Triebkopf 37 und dem deichselbildenden Längsholm 35 des Fahrgestells 5. Sowohl in der Ausführung der starren Kopplung als auch in der Ausführung der gelenkigen Kopplung zwischen Fahrgestell 5 und Triebkopf 37 können die Vorderräder 39 und die Laufräder der Hinterräder 9 abhängig oder unabhängig voneinander lenkbar sein.

Figur 2b zeigt eine Fahrsituation eines Kreiselschwaders 1 gemäß Figur 2a in einem Wendemanöver in einer Rückwärtsfahrt mit unabhängig voneinander lenkbarer Vorderachse 38 und Hinterachse des Fahrwerks 8 in Zusammenhang mit der Knicklenkung um die Hochachse 34 des Zuggelenks 33. Diese Ausgestaltung ist analog übertragbar in seiner Anwendung auf die Gespannsituation zwischen Traktor 7 und Kreiselschwader 1 gemäß Figur 1.

Diese erfinderische Ausgestaltung der Lenkbarkeit bietet eine besonders dynamisch ausgeprägte Beweglichkeit des Kreiselschwaders 1 auf engem Raum in schwierigen Verhältnissen.

In Figur 1 sind die Drehrichtungen 23, 23' der Schwadkreisel 2, 2', 3, 3', 4, 4' durch Drehrichtungspfeile gekennzeichnet. Die dargestellte Situation der Drehrichtungszuordnungen ermöglicht die Bildung eines Großschwaders 24 über die Arbeitsbreite 28 hinweg als Mittelablage im Bereich der Längsmittelebene 36. Erreicht wird diese durch die V-förmig gestaffelte Anordnung der Staffelreihen 10, 11, 12 mit den Schwadkreiseln 2, 2', 3, 3', 4, 4', wobei die Schwadkreisel 2, 3, 4 bzw. 2', 3', 4' untereinander einen Übergabeschwad 26, 27 bzw. 26', 27' erzeugen, die beidseitig der Längsmittelebene 36 dort zu einem Großschwad 24 zusammengelegt werden.

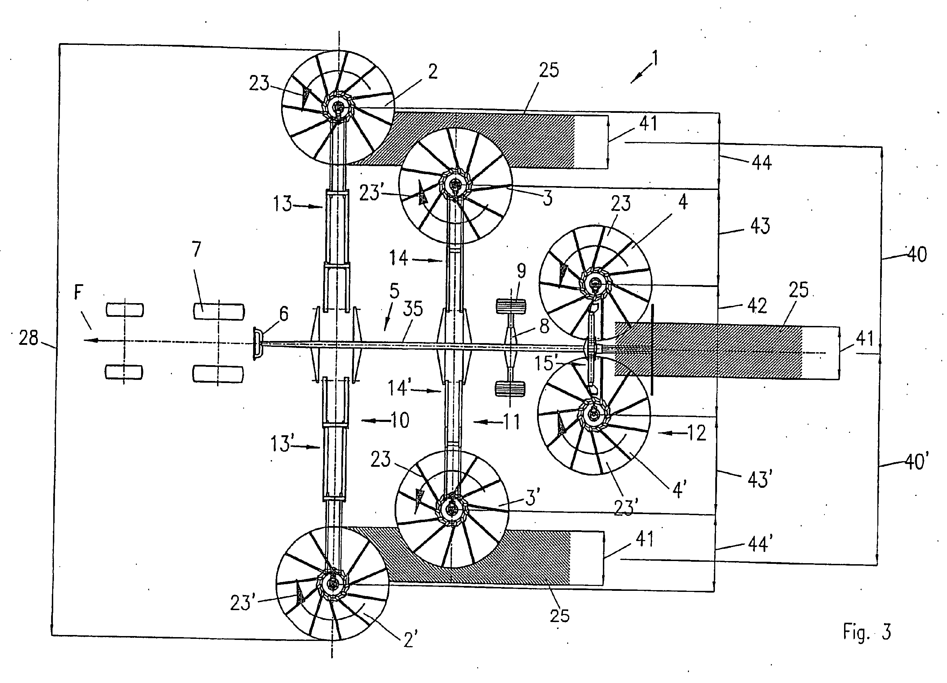

In Figur 3 ist ein Ausführungsbeispiel eines Kreiselschwaders 1 gemäß Figur 1 jedoch mit einer anderen Drehrichtungszuordnung der Schwadkreisel 2, 2', 3, 3', 4, 4' untereinander dargestellt. Dabei sind die Drehrichtungen 23, 23' der Schwadkreisel 3, 3' der Staffelreihe 11 gegenüber der Ausführung gemäß Figur 1 umgekehrt, d.h. entgegengesetzt. Diese arbeiten die Schwadkreisel 2, 3, 2', 3' und 4, 4' paarweise einander zu und erzeugen so jeweils einen Einzelschwad 25. Damit die Abstände 40, 40' der Einzelschwade 25 untereinander gleich sind und auch die Schwadbreiten 41 und deren Futtermassen untereinander möglichst gleich sind, ist es ein erfinderischer Vorteil, dass die Kreiselabstände 42, 43, 43', 44, 44' unabhängig voneinander aufeinander abgestimmt und eingestellt werden können. Dieses ermöglicht die voneinander unabhängige Längenveränderbarkeit aller Ausleger 13, 13', 14, 14', 15, 15'.

Damit kann auch gleichermaßen die Gesamtarbeitsbreite 28 variiert werden, d.h. dem Futterbestand oder den räumlichen Verhältnissen angepasst werden. Dieses kann vorzugsweise durch die Ausgestaltung der Ausleger 13, 13' , 14, 14' 15, 15' als teleskopierbare und damit längenveränderbare Ausleger erzeugt werden. Die Stellelemente der Teleskopie sind aus Gründen der Übersichtlichkeit nicht dargestellt. Derartige Stellantriebe können beispielsweise durch Hydraulikzylinder mit Differentialkolben gebildet werden.

In besonders vorteilhafter Weise können diese Hydraulikzylinder mit Wegaufnehmern als Längenmesssystem ausgebildet sein. Der momentane Ist-Zustand, d.h. die momentane Lage des Kolbens und damit die momentane Position des Schwadkreisels, kann damit erfasst und beispielsweise auf einem Terminal visualisiert dargestellt werden. Beim Einsatz eines Mikroprozessors beispielsweise in Verbindung mit einem BUS-System (LBS oder ISO-BUS), kann der Bedienkomfort und die Bedienungssicherheit erheblich gesteigert werden, indem sämtliche Stellvorgänge vom Fahrerplatz per Tastendruck durchgeführt werden können und dabei gleichzeitig auf besonders einfache Art und Weise Plausibilitätskontrollen durchgeführt werden können, die Fehlbedienungen verhindern können. Dieses senkt das Unfallrisiko und das Risiko der Schadensverursachung an der maschinellen Einrichtung.

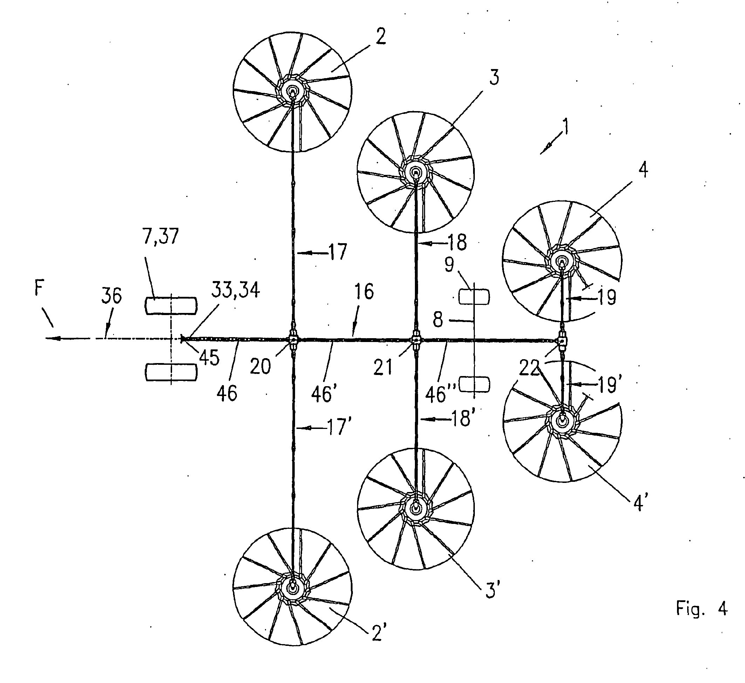

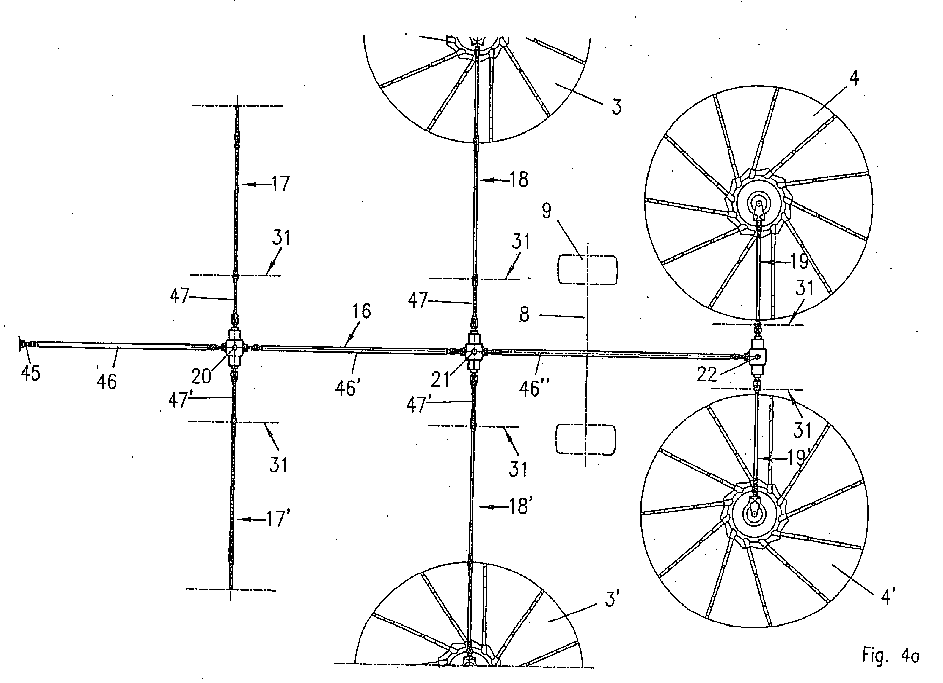

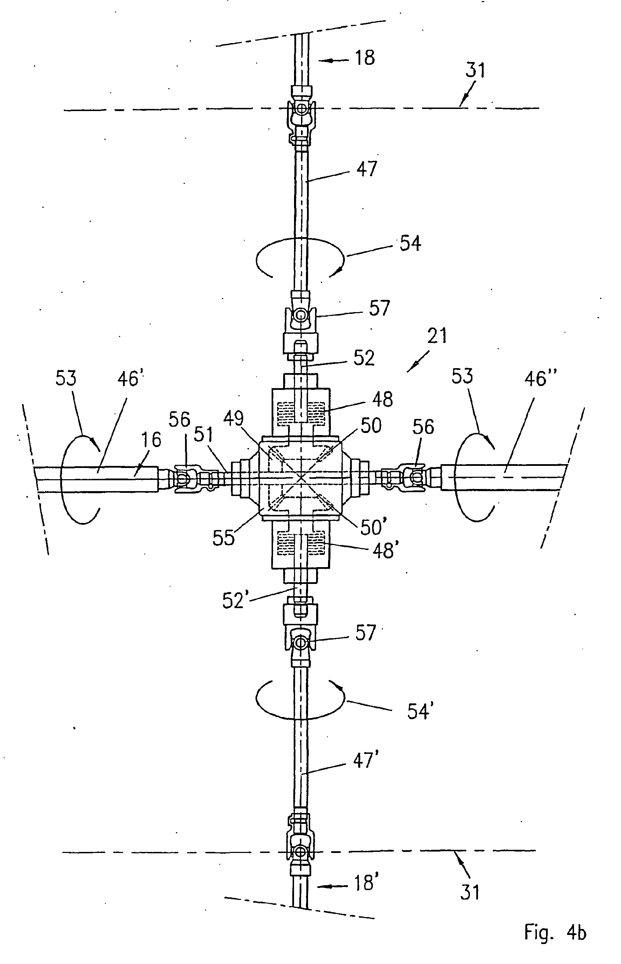

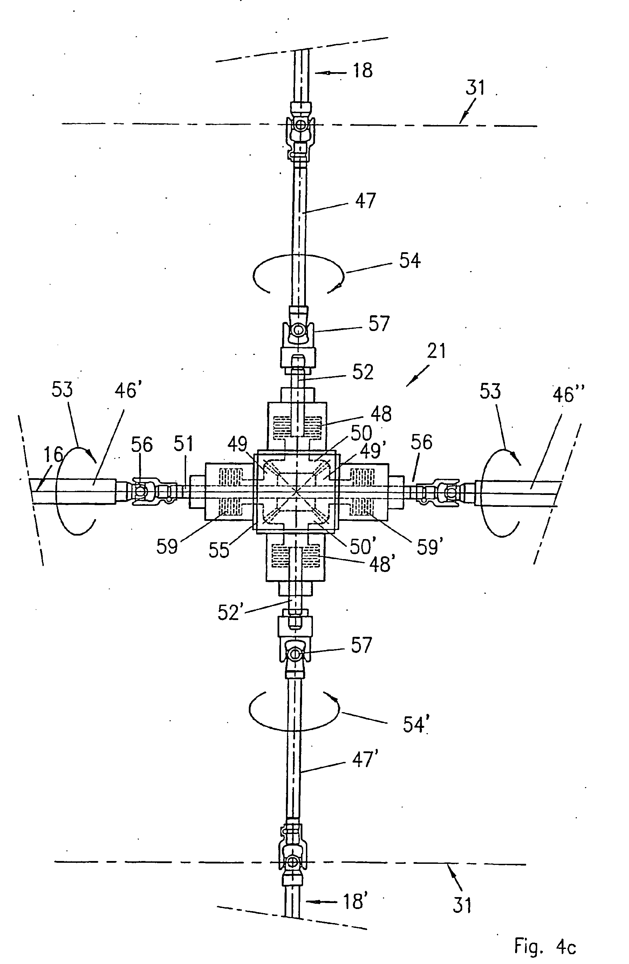

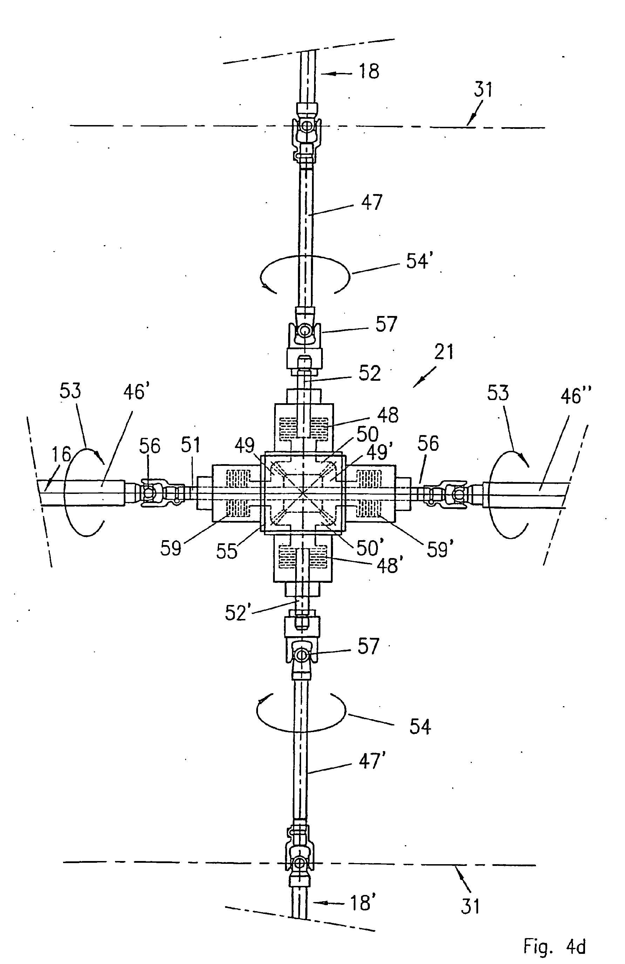

In Figur 4 ist ein Ausführungsbeispiel für den Antrieb des Kreiselschwaders 1 nach der Erfindung dargestellt. Figur 4a zeigt einen vergrößerten Ausschnitt aus Figur 4 zur besseren Verdeutlichung weiterer Einzelheiten.

Es handelt sich dabei um ein verzweigtes Antriebssystem auf rein mechanischer Basis. Es besteht aus einem Hauptantriebsstrang 16, bestehend aus in Reihe liegenden Gelenkwellen 46, 46', 46" mit den darin eingebundenen Winkelgetrieben 20, 21, 22. An diesen Winkelgetrieben 20, 21, 22 verzweigen sich die weiteren Antriebsstränge 17, 17', 18, 18', 19, 19', die zu den Schwadkreiseln 2, 2', 3, 3', 4, 4' führen und diese antreiben. Die Schwadkreisel 2, 2', 3, 3', 4, 4' selbst sind mittels allgemein bekanntem Winkelgetriebe, auf dessen Darstellung und Beschreibung daher an dieser Stelle verzichtet werden kann, mit den Enden der Antriebsstränge 17, 17', 18, 18', 19, 19' verbunden.

Der Hauptantriebsstrang 16 ist dabei mit der Zapfwelle 45 des Traktors 7 oder des Triebkopfes 37 verbunden und er verläuft längs der Fahrtrichtung F etwa in der Hauptmittelebene 36. In den Hauptantriebsstrang 16 eingebunden sind Winkelgetriebe 20, 21, 22, die abgehende Abtriebswellen aufweisen, an denen sich Abzweigungssträange 17, 17', 18, 18', 19, 19' anschließen. Dabei sind die Antriebswellen als Gelenkwellenverbindungen 47, 47' so ausgebildet, dass sie den Bewegungsformen der Schwadkreisel 2, 2', 3, 3', 4, 4' sowohl im Betrieb als auch zur Überführung in die Transportstellung gehorchen.

Figur 4b zeigt ein Ausführungsbeispiel für eine Verzweigung der Antriebsstränge 16, 18, 18' am Beispiel des Winkelgetriebes 21.

Die mittleren Antriebsstränge 18, 18' führen zu den Schwadkreiseln 3, 3', wobei diese mit schaltbaren Kupplungen 48, 48' zum antriebsseitigen An- oder Abkoppeln der Schwadkreisel 3, 3' ausgestattet sind. In einem Getriebegehäuse 55 ist ein Kegelradgetriebe, bestehend aus den Kegelrädern 49, 50, 50' gelagert. Die Durchtriebswelle 51 als Teil des Hauptantriebstrangs 16 ist in den Kardangelenken 56 mit den Gelenkwellen 46', 46" verbunden. Die Kupplungen 48, 48' sind beispielsweise ausgeführt als elektrisch betätigte Lamellenkupplungen. Der eine Teil der Kupplung 48 ist mit dem Kegelrad 50 und der andere Teil mit der Abtriebswelle 52 drehfest verbunden. Analog gilt dieses für das Kegelrad 50', die Kupplung 48', und die Abtriebswelle 52'. Dabei sind die Abtriebswellen 52, 52' in den Kardangelenken 57 mit den Gelenkwellen 47, 47', die Teil der Antriebsstränge 18, 18' darstellen, verbunden. Die Drehrichtungspfeile geben dabei die Drehrichtungen 53, 54, 54' der Antriebsstränge 16, 18, 18' an. Durch die Kupplungen 48, 48' können somit die Antriebsstränge 18, 18' antriebsseitig wahlweise an den Hauptantriebsstrang an- oder abgekoppelt werden.

Figur 4c zeigt eine erweiterte Ausführung des Schaltgetriebes analog Figur 4b mit der Möglichkeit der Drehrichtungsumkehr der Antriebsstränge 18, 18' und damit der Drehrichtungsumkehr der Schwadkreisel 3, 3'. Dazu wird das Kegelradgetriebe gemäß Figur 3b um ein weiteres Kegelrad 49' erweitert. Dabei werden die drehfesten Verbindugen zwischen den Kegelrädern 49 und 49' mit der Durchtriebswelle 51 durch schaltbare Kupplungen 59, 59', die ebenfalls als elektrisch betätigbare Lamellenkupplungen ausgebildet sein könnten, hergestellt. Durch wahlweise Betätigung und in Eingriffstellung befindlichen Kupplungen 59, 59', also durch die in Eingriff befindliche Kupplung 59 oder Kupplung 59', kann die Drehrichtung der Abtriebsstränge 18, 18' umgekehrt werden. Diese verdeutlicht analog die Figur 4d, in der anhand der Drehrichtungspfeile in den Abtriebssträngen 18, 18' die Veränderung der Drehrichtung 54, 54' gegenüber dem Beschaltungszustand analog Figur 3c verdeutlicht wird.

In dem dargestellten Ausführungsbeispiel sind die Abzweigungsstränge 17, 17', 18, 18', 19, 19' vorzugsweise durch schaltbare Kupplungen 48, 48' zur Übertragung der Antriebsdrehmomente mit den Winkelgetrieben 20, 21, 22 gekoppelt. Diese Kupplungen 48, 48' können beispielsweise elektrisch oder hydraulisch betätigbare und aus der Fahrerkabine heraus fernbedienbar, oder beispielsweise auch manuell betätigbare ein- und ausrückbare Sperrkörperkupplungen sein. Erfindungswesentlich ist in diesem Zusammenhang die Möglichkeit, wenigstens einen der Abzweigungsstränge 17, 17', 18, 18', 19, 19' oder in erweiterter Form sogar alle Abzweigungsstränge 17, 17', 18, 18', 19, 19' unabhängig vom jeweils anderen ab- bzw. wieder einschalten zu können.

In einer weiteren Ausgestaltung der Erfindung ist es möglich, vorzugsweise nur die mittleren Antriebsstränge 18, 18' in ihrer Drehrichtung umschaltbar zu gestalteten. Dieses kann im einfachsten Fall dadurch erzeugt werden, dass das jeweilige Winkelgetriebe 21 beidseitig der Längsmittelebene 36 jeweils zwei Antriebswellenzapfen mit unterschiedlichen Drehrichtungen aufweist, so dass die sich daran anschließenden Gelenkwellen lediglich umgesteckt werden, um unterschiedliche Drehrichtungen zu erzeugen.

Alternativ können statt schaltbarer Kupplungen auch Schaltgetriebe eingesetzt werden, die es ermöglichen, wechselnde Drehrichtungen oder abschaltbare Antriebsstränge zu erzeugen.

Diese Ausbildung der Antriebsstränge ermöglicht insbesondere mit der Möglichkeit der Drehrichtungsumkehr die unter Figur 1 und Figur 3 näher erläuterten unterschiedlichen Möglichkeiten der Schwadbildung und deren Schwadablage.

Prinzipiell kann das nachfolgend beschriebene Antriebssystem auch durch hydrostatische oder elektrische Antriebe direkt oder indirekt angeblockt an den Schwadkreisel 2, 2', 3, 3', 4, 4' ersetzt werden. Hydrostatische oder elektrische direkt an den Schwadkreisel 2, 2', 3, 3', 4, 4' angeblockte Antriebsmotoren ermöglichen es auf besonders einfache Art und Weise, die Schwadkreisel in ihrer Drehrichtung 23, 23' umzusteuern bzw. diese antriebsseitig abzuschalten.

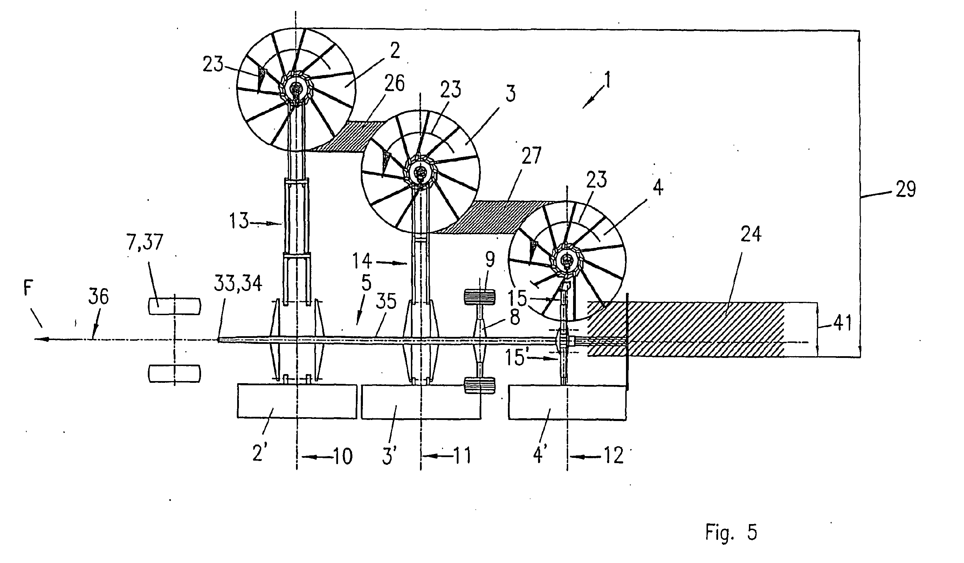

Eine weitere besonders vorteilhafte Ausgestaltung der Erfindung besteht darin, dass sich beispielsweise alle Schwadkreisel einer linken oder rechten Hälfte eines Kreiselschwaders 1 nach der Erfindung hochklappen und antriebsseitig völlig außer Eingriff bringen lassen, so dass die im Eingriff verbleibende andere Hälfte des Kreiselschwaders 1 sich als reiner Seitenschwader nutzen lässt. Ein derartiger Einsatzfall ist in Figur 5 dargestellt. Somit halbiert sich die Gesamt-Arbeitsbreite 28 auf eine reduzierte Arbeitsbreite 29.

Weitere vorteilhafte Einsatzmöglichkeiten nach der Erfindung bieten sich durch die variable Gestaltung der Arbeitsbreite 28', indem eben insbesondere die Ausleger 12, 12', 13, 13' in ihrer ausgefahrenen Länge variiert werden können.

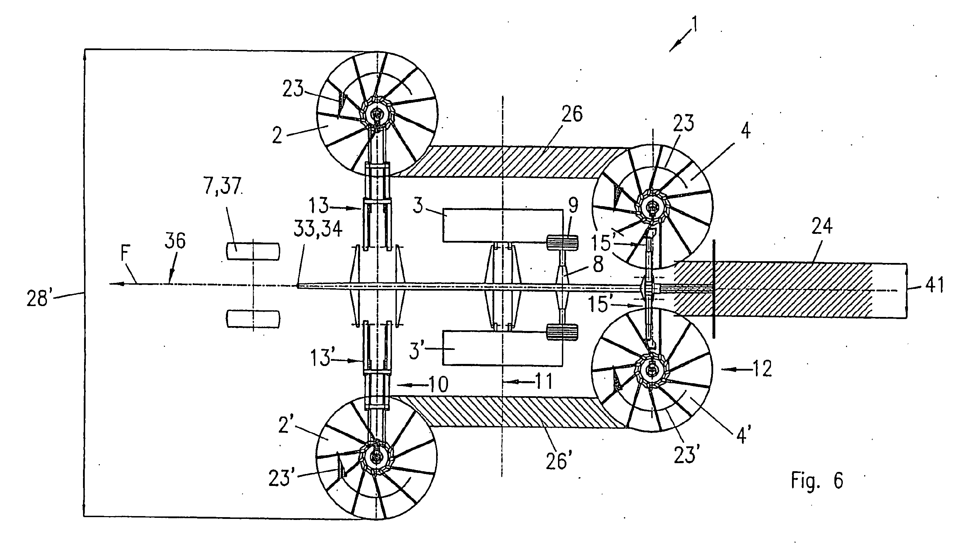

Figur 6 zeigt einen derartigen Anwendungsfall nach der Erfindung. Die beiden mittleren Schwadkreisel 3, 3' sind hochgeklappt, und die beiden vorderen Schwadkreisel 2, 2' sind im Einsatz, wobei die vorderen Ausleger 13, 13' in ihrer Länge verkürzt wurden, so dass sich die Arbeitsbreite 28' eingestellt hat. Dabei ist die Arbeitsbreite 28' so eingestellt, dass sich trotz der hochgeklappten Schwadkreisel 3, 3' eine lückenlose Überdeckung der Einzugsbereiche der verbleibenden im Einsatz befindlichen Schwadkreisel 2, 3 bzw. 2, 3' einstellt und der Kreiselschwader 1 somit als Mittelschwader mit reduzierter Arbeitsbereite 28 eingesetzt werden kann. Dieser Vorteil greift insbesondere dann, wenn die mittleren Schwadkreisel 3, 3' in ihrer Drehrichtung so ausgelegt und nicht veränderbar sind, dass der Kreiselschwader 1 beim Einsatz aller Schwadkreisel 2, 2', 3, 3', 4, 4' lediglich drei Einzelschwade 25 gemäß Figur 3 bilden und ablegen kann.

Wird somit auf die Umschaltbarkeit des mittleren Winkelgetriebes im Hinblick auf Drehrichtungsumkehr verzichtet, und ist die Drehrichtungszuordnung als fester Bestandteil des Antriebsstrangs so konfiguriert, dass die Schwadbildung und Schadablage gemäß Figur 3 ausgelegt ist, so kann allein durch Hochklappen der Schwadkreisel 3, 3', d.h. durch Außerbetriebsetzung der mittleren Staffelreihe 11, wahlweise ein reiner Mittelschwader oder alternativ durch Herunterklappen der gleichen Staffelreihe ein Großschwader mit Mehrfachschwadablage, im dargelegten Ausführungsbeispiel mit 3-fach Schwadablage, erzeugt werden.

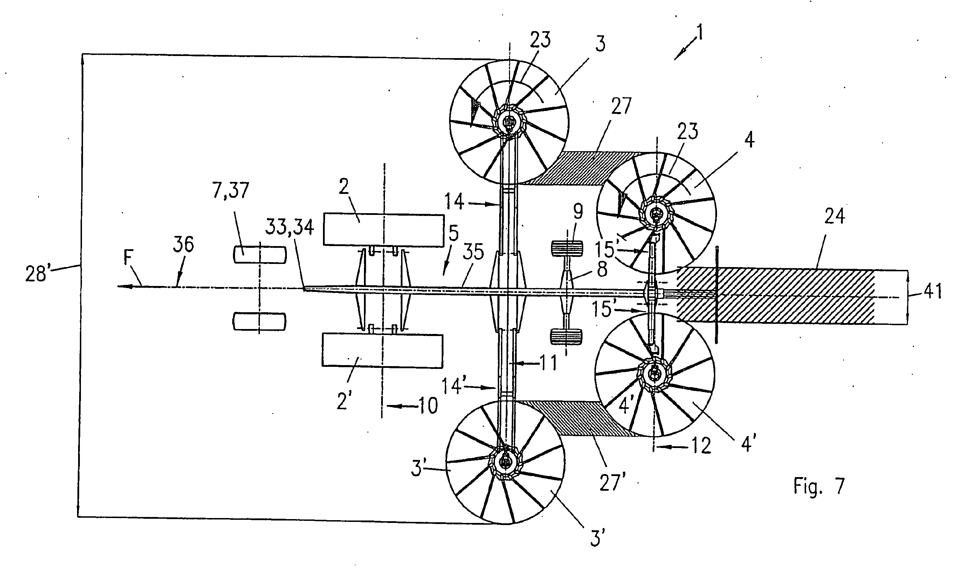

Ebenfalls kann die Arbeitsbreite von der Arbeitsbreite 28 auf eine Arbeitsbreite 28' verringert werden, indem die vorderen Arbeitskreisel 2, 2' völlig hochgeklappt und antriebsseitig außer Eingriff gebracht werden. Dieser Einsatzfall ist in Figur 7 dargestellt.

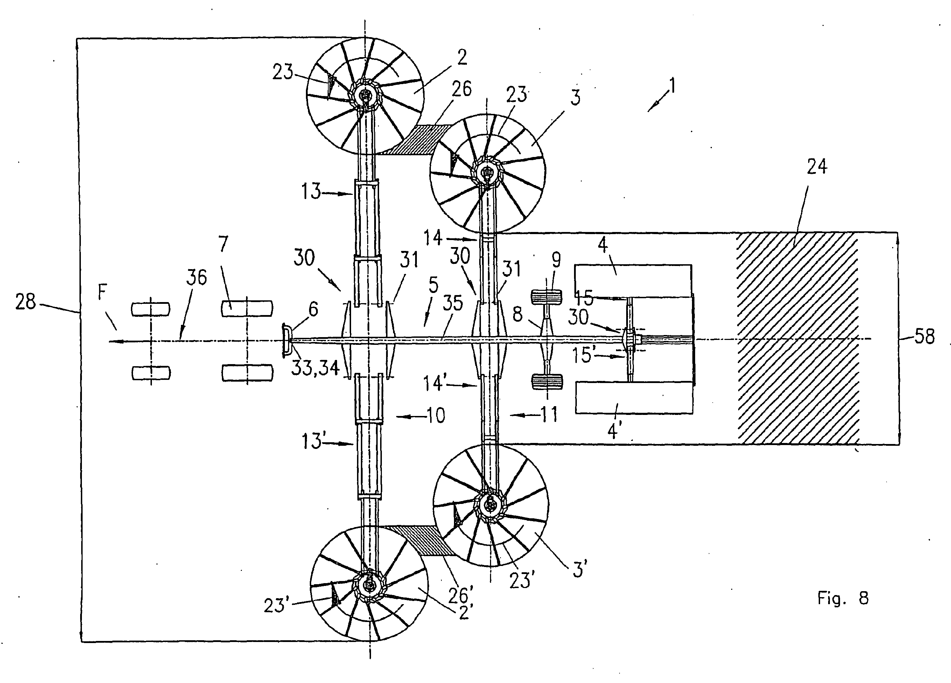

Figur 8 zeigt eine weitere Anwendungsmöglichkeit des Kreiselschwaders 1 nach der Erfindung zur Bildung von Breitschwaden 58 zur Aufnahme durch ein Breit-pick-up als Aufsammeleinrichtung für nachfolgende Arbeitsgänge. Eine derartige Breit-pick-up-Aufsammeleinrichtung kann beispielsweise als Vorsatzgerät für Feldhäcksler zum Einsatz kommen.

Somit bietet die Erfindung ein großes Spektrum an variablen Einsatzmöglichkeiten des Kreiselschwaders 1 als Großflächenschwader nach der Erfindung.

Allein durch steuerungstechnische Beschaltungsmaßnahmen, die fernbedienbar vom Fahrersitz aus der Fahrerkabine heraus erfolgen können, kann in Verbindung mit den Vorteilen der Erfindung, wahlweise ein Kreiselschwader 1 als Mittelschwader mit erheblich variabler Arbeitsbreite 28, 28' und variabler Schwadbreite 41 als Kreiselschwader 1 mit Mehrfachschwadablage und variabler Schwadbreite 41 in Verbindung mit variablen Schwadabständen 40, 40' und als reiner Seitenschwader am Ort des momentanen Einsatzes ohne Umbauarbeiten in Funktion gebracht werden.

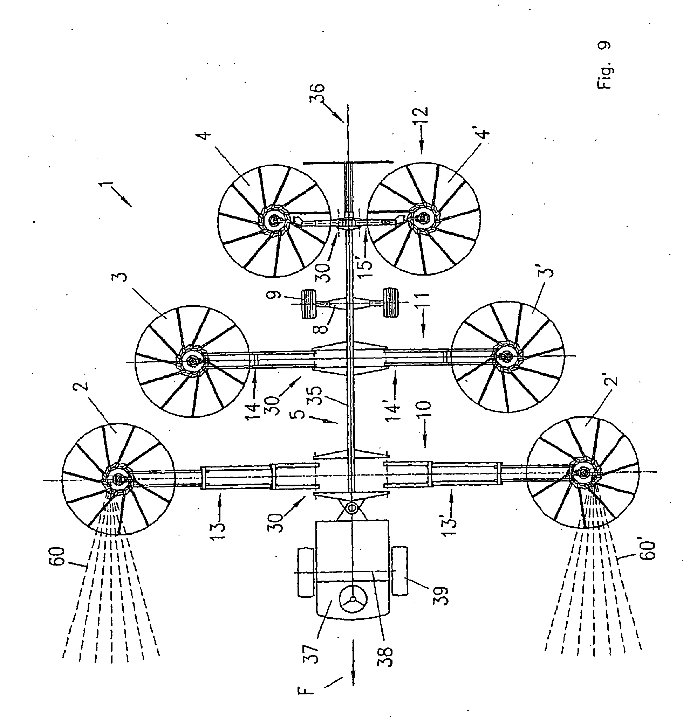

Wegen der großen Arbeitsbreite 28, die etwa bei 22 Metern liegen kann, ist es zweckdienlich, in einer weiteren vorteilhaften Ausgestaltung der Erfindung Kreiselschwader 1 dieser Größenordnung mit einem Bestandskantenführungs- und/oder Hinderniserkennungssystem 60, 60' auszurüsten, wie dieses in Figur 9 symbolisch dargestellt ist. Diese an sich bekannten Systeme, beispielsweise lasergeführt, ermöglichen einem derartigen Führungssystem die Grenzlinie zwischen einer bereits geräumten Fläche und der noch nicht geräumten Fläche zu erkennen, so dass die Steuerung des Traktors 7 oder des selbstfahrenden Kreiselschwaders automatisch erfolgen kann. Hinderniserkennungssysteme, die auch in dem Bestandskantenführungssystem integriert sein können, helfen dabei, Kollisionen, beispielsweise mit Strommasten, Bäumen oder Zaunpfählen zu verhindern.

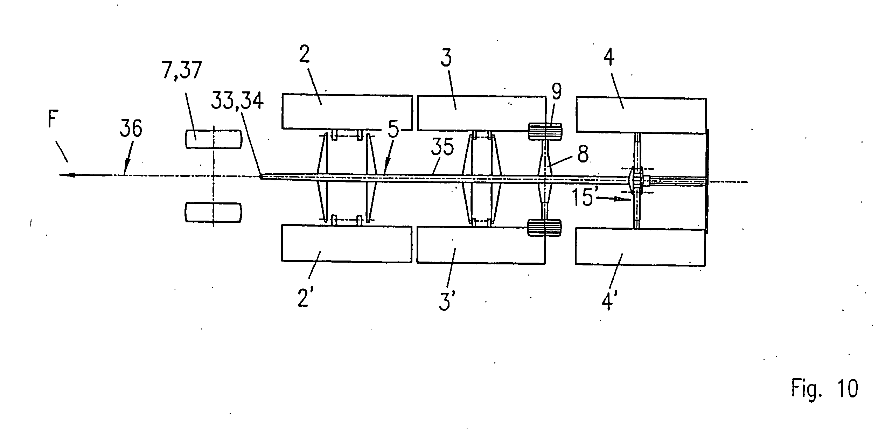

In Figur 10 ist ein Kreiselschwader 1 nach der Erfindung in Transportstellung mit völlig seitlich hochgeklappten Schwadkreiseln 2, 2', 3, 3', 4, 4' dargestellt. Dazu werden alle längenveränderbaren Ausleger vor dem Hochklappen in ihre kürzeste Position überführt. Ergänzend kann dazu beispielsweise zusätzlich eine Absenkung des Fahrgestells erfolgen, so das dadurch die Gesamthöhe des Kreiselschwaders 1 in der Transportfahrt zusätzlich reduziert werden kann.

### Bezugszeichenliste:

- 1: Kreiselschwader
- 2: Schadkreisel
- 3: Schwadkreisel
- 4: Schwadkreisel
- 5: Fahrgestell
- 6: Kupplungseinrichtung
- 7: Traktor
- 8: Fahrwerk
- 9: Laufräder
- 10: Staffelreihe
- 11: Staffelreihe
- 12: Staffelreihe
- 13: Ausleger
- 14: Ausleger
- 15: Ausleger
- 16: Hauptantriebsstrang
- 17: Antriebsstrang
- 18: Antriebsstrang
- 19: Antriebsstrang
- 20: Winkelgetriebe
- 21: Winkelgetriebe
- 22: Winkelgetriebe
- 23: Drehrichtung
- 24: Großschwad
- 25: Einzelschwad
- 26: Übergabeschwad
- 27: Übergabeschwad
- 28: Arbeitsbereite
- 29: Arbeitsbreite
- 30: Klappgelenk
- 31: Gelenkachse
- 32:
- 33: Zuggelenk
- 34: Hochachse
- 35: Längsträger
- 36: Längsmittelebene
- 37: Triebkopf
- 38: Vorderachse
- 39: Antriebsrad
- 40: Abstand
- 41: Schwadbreite
- 42: Kreiselabstand
- 43: Kreiselabstand
- 44: Kreiselabstand
- 45: Zapfwelle
- 46: Gelenkwelle
- 47: Gelenkwelle
- 48: Kupplung
- 49: Kegelrad
- 50: Kegelrad
- 51: Durchtriebswelle
- 52: Abtriebswelle
- 53: Drehrichtung
- 54: Drehrichtung
- 55: Getriebegehäuse
- 56: Kardangelenk
- 57: Kardangelenk
- 58: Breitschwad
- 59: Kupplung
- 60: Hinderniserkennung

- F: Fahrtrichtung

## Patentansprüche

1. Kreiselschwader (1) mit um im Wesentlichen vertikale Achsen umlaufend angetriebene in Fahrtrichtung (F) hintereinander gestaffelt angeordnete am Boden durch Laufräder abgestützte Schwadkreisel zum Zusammenrechen von Erntegut, wobei die Schwadkreisel durch Hochschwenken aus der Arbeitsstellung in eine Transportstellung und umgekehrt verschwenkbar sind, wobei die Schwadkreisel (2, 2'; 3, 3'; 4, 4') an Auslegern (13, 14, 15) in Gelenkachsen (31) mit einen Fahrgestell (5) verbunden sind, **dadurch gekennzeichnet, dass** die Schwadkreisel (2, 2'; 3, 3'; 4, 4') in V-förmiger Anordnung gestaffelt mindestens sechs Schwadkreisel (2, 2'; 3, 3'; 4, 4') umfassen und dass Antriebsmittel (16 bis 22) zum unabhängig voneinander steuerbaren Antreiben der einzelnen Schwadkreisel (2, 2'; 3, 3'; 4, 4') sowie Stellmittel (13, 14, 15, 30) zum unabhängig voneinander steuerbaren Verstellen der einzelnen Schwadkreisel (2, 2'; 3, 3'; 4, 4') von der Arbeits- in die Transportstellung vorgesehen sind.

2. Kreiselschwader nach Anspruch 1, **dadurch gekennzeichnet, dass** zentrale Steuermittel zum unabhängig voneinander Steuern der Antriebsmittel (16 bis 22) der einzelnen Schwadkreisel (2, 2'; 3, 3'; 4, 4') und zum unabhängig voneinander Steuern der Stellmittel (13, 14, 15, 30) der einzelnen Schwadkreisel (2, 2'; 3, 3'; 4, 4') vorgesehen sind.

3. Kreiselschwader nach einem der vorgenannten Ansprüche, **dadurch gekennzeichnet, dass** Steuermittel in der Fahrerkabine vom Fahrersitz aus bedienbar angeordnet sind.

4. Kreiselschwader nach einem der vorgenannten Ansprüche, **dadurch gekennzeichnet, dass** die Schwadkreisel (2, 2'; 3, 3'; 4, 4') längenveränderbare Ausleger (13, 14, 15) aufweisen, die mit dem Fahrgestell (5) in Wirkverbindung stehen.

5. Kreiselschwader nach einem der vorgenannten Ansprüche, dass die Schwadkreisel (2, 2'; 3, 3'; 4, 4') höhenverstellbar dem Bodenprofil anpassbar ausgebildet sind.

6. Kreiselschwader nach einem der vorgenannten Ansprüche, **dadurch gekennzeichnet, dass** wenigstens ein Stellantrieb der längenveränderbaren Ausleger(13, 14, 15) mit einem Wegmesssystem zur momentanen Lagebestimmung eines Schwadkreisels (2, 2'; 3, 3'; 4, 4') in Bezug auf die Längsmittelebene (36) ausgestattet ist.

7. Kreiselschwader nach einem der vorgenannten Ansprüche, dass Schwadkreisel (2, 2', 3, 3', 4, 4') mit zugehörigen Auslegern (13, 14, 15) und/oder Stellmitteln (13, 14, 15, 30) und/oder Antriebsmitteln (16 bis 22) zu beliebigen Gruppen (10, 11, 12) zusammengefasst sind und als jeweilige Gruppe (10, 11, 12) unabhängig voneinander ansteuerbar sind.

8. Kreiselschwader nach einem der vorgenannten Ansprüche, **dadurch gekennzeichnet, dass** die jeweilige Gruppen (10, 11, 12) in verschiedene vorgebbare Arbeits- und/oder Transportstellungen überführbar sind.

9. Kreiselschwader nach einem der vorgenannten Ansprüche, **dadurch gekennzeichnet, dass** die Steuerung der Schwadkreisel (2, 2'; 3, 3'; 4, 4') und/oder der Antriebsmittel (16 bis 22) und der Stellmittel (13, 14, 15, 3C) mit Hilfe von Plausibilitätskontrollen kontrollierbar ist.

10. Kreiselschwader nach einem der vorgenannten Ansprüche, **dadurch gekennzeichnet, dass** Steuersignale mit Hilfe eines Bus-Systems den Schwadkreiseln (2, 2'; 3, 3'; 4, 4') und/oder den Antriebsmitteln (16 bis 22) und den Stellmitteln (13, 14, 15, 30) zuführbar sind.

11. Kreiselschwader nach einem der vorgenannten Ansprüche, dass hydraulische Antriebe der Schwadkreisel (2, 2'; 3, 3'; 4, 4') vorgesehen sind.

12. Kreiselschwader nach einem der vorgenannten Ansprüche, **dadurch gekennzeichnet, dass** der hydraulische Antrieb direkt an dem Schwadkreisel (2, 2'; 3, 3'; 4, 4') angeblockt ist.

13. Kreiselschwader nach einem der vorgenannten Ansprüche, **dadurch gekennzeichnet, dass** der hydraulische Antrieb wenigstens eine Druckerzeugungseinheit zur Erzeugung eines hydraulischen Drucks umfasst.

14. Kreiselschwader nach einem der vorgenannten Ansprüche, **dadurch gekennzeichnet, dass** der Kreiselschwader als selbstfahrender Kreiselschwader (1) ausgebildet ist.

15. Kreiselschwader nach einem der vorgenannten Ansprüche, **dadurch gekennzeichnet, dass** die Schwadkreisel (2, 2'; 3, 3'; 4, 4') und/oder die Antriebsmittel (16 bis 22) und die Stellmittel (13, 14, 15, 30) fernbedienbar sind.

16. Kreiselschwader nach einem der vorgenannten Ansprüche, **dadurch gekennzeichnet, dass** die Schwadkreisel (2, 2'; 3, 3'; 4, 4') der linken Hälfte von der rechten Hälfte des Kreiselschwaders separat steuerbar sind.

## Claims

1. Rotary rake (1) with rake rotors supported on the ground by running wheels, arranged staggered one behind the other in the travel direction (F) and driven to circulate about substantially vertical axes to rake up the harvest, wherein the rake rotors can be pivoted by being pivoted up from the working position into a transporting position and vice versa, the rake rotors (2, 2'; 3, 3'; 4, 4') being connected on booms (13, 14, 15) in joint axles (31) to a chassis (5), **characterised in that** the rake rotors (2, 2'; 3, 3'; 4, 4')comprise, staggered in a V-shaped arrangement, at least six rake rotors (2, 2'; 3, 3'; 4, 4') and **in that** drive means (16 to 22) to drive, so as to be controllable independently of one another, the individual rake rotors (2, 2'; 3, 3'; 4, 4') are provided as well as adjusting means (13, 14, 15, 30) for the adjustment, so as to be controllable independently of one another, of the individual rake rotors (2, 2'; 3, 3'; 4, 4') from the working position into the transporting position.

2. Rotary rake according to claim 1, **characterised in that** central control means are provided to control the drive means (16 to 22) of the individual rake rotors (2, 2'; 3, 3'; 4, 4') independently of on another and to control the adjusting means (13, 14, 15, 30) of the individual rake rotors (2, 2'; 3, 3'; 4, 4') independently of one another.

3. Rotary rake according to any one of the preceding claims, **characterised in that** control means are arranged in the driver's cab so as to be operable from the driver's seat.

4. Rotary rake according to any one of the preceding claims, **characterised in that** the rake rotors (2, 2'; 3, 3'; 4, 4') have length-variable booms (13, 14, 15), which have an operative connection to the chassis (5).

5. Rotary rake according to any one of the preceding claims, **characterised in that** the rake rotors (2, 2'; 3, 3'; 4, 4') are configured to be height-adjustable in adaptation to the ground profile.

6. Rotary rake according to any one of the preceding claims, **characterised in that** at least one adjusting drive of the length-variable booms (13, 14, 15) is equipped with a path measuring system for the instantaneous position determination of a rake rotor (2, 2'; 3, 3'; 4, 4') in relation to the longitudinal centre plane (36).

7. Rotary rake according to any one of the preceding claims, **characterised in that** rake rotors (2, 2'; 3, 3'; 4, 4') with associated booms (13, 14, 15) and/or adjusting means (13, 14, 15, 30) and/or drive means (16 to 22) are combined into any desired groups (10, 11, 12) and, as a respective group (10, 11, 12), can be activated independently of one another.

8. Rotary rake according to any one of the preceding claims, **characterised in that** the respective groups (10, 11, 12) can be transferred into various predeterminable working and/or transporting positions.

9. Rotary rake according to any one of the preceding claims, **characterised in that** the control of the rake rotors (2, 2'; 3, 3'; 4, 4') and/or the drive means (16 to 22) and the adjusting means (13, 14, 15, 30) can be checked with the aid of plausibility checks.

10. Rotary rake according to any one of the preceding claims, **characterised in that** control signals can be supplied with the aid of a bus system to the rake rotors (2, 2'; 3, 3'; 4, 4') and/or the drive means (16 to 22) and the adjusting means (13, 14, 15, 30).

11. Rotary rake according to any one of the preceding claims, **characterised in that** hydraulic drives of the rake rotors (2, 2'; 3, 3'; 4, 4') are provided.

12. Rotary rake according to any one of the preceding claims, **characterised in that** the hydraulic drive is directly linked to the rake rotor (2, 2'; 3, 3'; 4, 4').

13. Rotary rake according to any one of the preceding claims, **characterised in that** the hydraulic drive comprises at least one pressure generation unit to generate a hydraulic pressure.

14. Rotary rake according to any one of the preceding claims, **characterised in that** the rotary rake is configured as a self-propelled rotary rake (1).

15. Rotary rake according to any one of the preceding claims, **characterised in that** the rake rotors (2, 2'; 3, 3'; 4, 4') and/or the drive means (16 to 22) and the adjusting means (13, 14, 15, 30) can be remotely controlled.

16. Rotary rake according to any one of the preceding claims, **characterised in that** the rake rotors (2, 2'; 3, 3'; 4, 4') of the left half can be controlled separately from the right half of the rotary rake.

## Revendications

1. Andaineuse rotative (1) comportant des rotors andaineurs entraînés, tournant autour d'axes pratiquement verticaux, étagés les uns derrière les autres dans la direction de déplacement (F) et s'appuyant sur le sol par des roues de sustentation, pour regrouper des produits de récolte,
* les rotors andaineurs se relevant par basculement de leur position de travail dans une position de transport et inversement,
* les rotors andaineurs (2, 2' ; 3, 3' ; 4, 4') étant portés des bras (13, 14, ,15) reliés à un châssis (5) par des axes d'articulation (31),
andaineuse rotative **caractérisée en ce que**
- les rotors andaineurs (2, 2' ; 3, 3' ; 4, 4') comprennent au moins six rotors andaineurs (2, 2' ; 3, 3' ; 4, 4') installés de manière étagée suivant une disposition en V, et
- des moyens d'entraînement (16-22) pour commander indépendamment l'entraînement des différents rotors andaineurs (2, 2' ; 3, 3' ; 4, 4') ainsi que des moyens d'actionnement (13, 14, 15, 30) pour actionner de manière commandée et indépendante les différents rotors andaineurs (2, 2' ; 3, 3' ; 4, 4') pour les faire passer de leur position de travail à leur position de transport.

2. Andaineuse rotative selon la revendication 1,
**caractérisée par**
des moyens de commande centralisés pour commander indépendamment les uns des autres les moyens d'entraînement (16-22) des différents rotors andaineurs (2, 2' ; 3, 3' ; 4, 4') et pour commander indépendamment les uns des autres les moyens d'actionnement (13, 14, 15, 30) des différents rotors andaineurs (2, 2' ; 3, 3' ; 4, 4').

3. Andaineuse rotative selon l'une des revendications précédentes,
**caractérisée par**
des moyens de commande installés dans la cabine de conducteur et se manoeuvrant à partir du siège du conducteur.

4. Andaineuse rotative selon l'une des revendications précédentes,
**caractérisée en ce que**
les rotors andaineurs (2, 2' ; 3, 3' ; 4, 4') comportent des bras (13, 14, 15) de longueur variable coopérant avec le châssis (5).

5. Andaineuse rotative selon l'une des revendications précédentes,
**caractérisée en ce que**
les rotors andaineurs (2, 2' ; 3, 3' ; 4, 4') sont adaptés au profil du sol de manière réglable en hauteur.

6. Andaineuse rotative selon l'une des revendications précédentes,
**caractérisée par**
au moins un entraînement d'actionnement des bras (13, 14, 15) de longueur réglable, est équipé d'un système de mesure de course pour déterminer la position instantanée d'un rotor andaineur (2, 2' ; 3, 3' ; 4, 4') par rapport au plan médian longitudinal (36).

7. Andaineuse rotative selon l'une des revendications précédentes,
**caractérisée en ce que**
- les rotors andaineurs (2, 2' ; 3, 3' ; 4, 4') et leurs bras correspondants (13, 14, 15) et/ou les moyens d'actionnement (13, 14, 15, 30) et/ou les moyens d'entraînement (16-22) sont regroupés en des groupes quelconques (10, 11, 12) et chaque groupe (10, 11, 12) se commande indépendamment des autres.

8. Andaineuse rotative selon l'une des revendications précédentes,
**caractérisée en ce que**
les différents groupes (10, 11, 12) peuvent passer dans différentes positions de travail et/ou de transport prédéfinies.

9. Andaineuse rotative selon l'une des revendications précédentes,
**caractérisée en ce que**
la commande des rotors andaineurs (2, 2' ; 3, 3' ; 4, 4') et/ou des moyens d'entraînement (16-22) et des moyens d'actionnement (13, 14, 15, 30) se contrôle par des contrôles de plausibilité.

10. Andaineuse rotative selon l'une des revendications précédentes,
**caractérisée en ce qu'**
un système de bus transmet des signaux de commande aux rotors andaineurs (2, 2' ; 3, 3' ; 4, 4') et/ou aux moyens d'entraînement (16-22) et aux moyens d'actionnement (13, 14, 15, 30).

11. Andaineuse rotative selon l'une des revendications précédentes,
**caractérisée par**
des moyens d'entraînement hydraulique pour les rotors andaineurs (2, 2';3,3';4,4').

12. Andaineuse rotative selon l'une des revendications précédentes,
**caractérisée en ce que**
l'entraînement hydraulique est un bloc fixé directement aux rotors andaineurs (2, 2' ; 3, 3' ; 4, 4').

13. Andaineuse rotative selon l'une des revendications précédentes,
**caractérisée en ce que**
l'entraînement hydraulique comporte au moins une unité générant la pression pour générer une pression hydraulique.

14. Andaineuse rotative selon l'une des revendications précédentes,
**caractérisée en ce que**
l'andaineuse rotative est une andaineuse rotative (1) automotrice.

15. Andaineuse rotative selon l'une des revendications précédentes,
**caractérisée en ce que**
les rotors andaineurs (2, 2' ; 3, 3' ; 4, 4') et/ou les moyens d'entraînement (16-22) et les moyens d'actionnement (13, 14, 15, 30) sont télécommandés.

16. Andaineuse rotative selon l'une des revendications précédentes,
**caractérisée en ce que**
les rotors andaineurs (2, 2' ; 3, 3' ; 4, 4') de la moitié gauche se commandent séparément des rotors andaineurs de la moitié droite.
